(19) Europäisches Patentamt
European Patent Office
Office européen des brevets

(11) **EP 2 976 894 B1**

(12) **EUROPÄISCHE PATENTSCHRIFT**

(45) Veröffentlichungstag und Bekanntmachung des Hinweises auf die Patenterteilung:
**19.04.2017 Patentblatt 2017/16**

(51) Int Cl.:
***H04R 7/02*** (2006.01)   ***H04R 7/06*** (2006.01)
***H04R 7/10*** (2006.01)   ***H04R 7/12*** (2006.01)

(21) Anmeldenummer: **15702813.5**

(22) Anmeldetag: **06.02.2015**

(86) Internationale Anmeldenummer:
**PCT/EP2015/052538**

(87) Internationale Veröffentlichungsnummer:
**WO 2015/132042 (11.09.2015 Gazette 2015/36)**

(54) **MEHRSCHICHT-VERBUND MIT HOHER INNERER DÄMPFUNG**

MULTILAYER COMPOSITE HAVING HIGH INTERNAL DAMPING

COMPOSÉ À PLUSIEURS COUCHES AVEC ATTÉNUATION INTERNE ÉLEVÉE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **05.03.2014 DE 102014204015**

(43) Veröffentlichungstag der Anmeldung:
**27.01.2016 Patentblatt 2016/04**

(73) Patentinhaber: **tesa SE**
**22848 Norderstedt (DE)**

(72) Erfinder:
• **HÄNLE, Mark**
**22851 Norderstedt (DE)**
• **EGGER, Michael**
**22297 Hamburg (DE)**
• **BÖHM, Nicolai**
**22559 Hamburg (DE)**
• **MAATZ, Gero**
**20253 Hamburg (DE)**
• **WAMBACH, René**
**42781 Haan (DE)**

(56) Entgegenhaltungen:
**EP-A2- 0 185 356      DE-A1-102012 208 477**
**DE-C1- 19 925 787      JP-A- 2009 213 019**
**US-A1- 2006 281 381**

EP 2 976 894 B1

**Beschreibung**

Die Erfindung betrifft ein Mehrschicht-Verbund mit hoher innerer Dämpfung zur Verwendung als Membran für elektroakustische Wandler.

Die Schallerzeugung in Mobiltelefonen und Smartphones zur Wiedergabe von Sprache, Klingeltönen, Musik etc. erfolgt durch kleine elektroakustische Wandler, sogenannte Mikrolautsprecher. Die Größe der Membranen solcher Mikrolautsprecher, die auch in Kopfhörern, Notebooks, LCD-Fernse.hern oder Personal Digital Assistants (PDAs) eingesetzt werden, liegt typischerweise im Bereich 20 mm$^2$ bis 900 mm$^2$.

Da Mikrolautsprecher aufgrund der Design-Anforderungen an die entsprechenden elektronischen Geräte immer kleiner und flacher werden, dabei aber zusätzlich mit höherer Leistung betrieben werden sollen, nimmt die Temperaturbelastung des Mikrolautsprechers und insbesondere seiner Membran immer mehr zu. Gleichzeitig steigen auch die Anforderungen an die akustischen Eigenschaften der Lautsprecher, die zum Beispiel in Smartphones vermehrt auch zum lauten Abspielen von Musik eingesetzt werden und dabei auch eine gute Kfangquaütät haben sotlten. Die Anforderungen an die mechanische Belastbarkeit und akustische Güte der Mikrolautsprecher-Membran sind dadurch in den letzten Jahren enorm gestiegen.

Eine Lautsprechermembran sollte allgemein einerseits möglichst steif und leicht sein, um einen hohen Schalldruck zu erzeugen und einen breiten Frequenzbereich abzudecken, andererseits aber gleichzeitig gut gedämpft sein, um einen möglichst glatten Frequenzgang zu zeigen. Da die Eigenschaften steif, leicht und gut gedämpft einen konstruktiven Widerspruch ergeben und nicht alle gleichzeitig erfüllt werden können (je steifer, desto schlechter die Dämpfung und umgekehrt), müssen generell bei jeder Membran Kompromisse bezüglich der Steifigkeit und der Dämpfung des Membranmaterials eingegangen werden oder steife Materialien mit gut dämpfenden Materialien kombiniert werden. So beschreibt die US 7,726,441 B eine Membran aus einem Mehrschicht-Verbund aus zwei steifen Polymerfolien und einer zwischen diesen Folien liegenden dämpfenden Klebmasse-Schicht. US 8,189,851 B beschreibt die Verwendung von weichen Haftklebmassen als Dämpfungsschichten in Mehrschicht-Verbunden und nennt als Maß für die Dämpfung des mehrschichtigen Membran-Gesamtaufbaues den mechanischen Verlustfäktor (Tangens delta; tan $\delta$) ausgehend vom Elastizitätsmodul E (Youngscher Modul). Dieser ist definiert als das Verhältnis von Verlustmodul E" und Speichermodul E': tan $\delta$ = E"/E' und soll in einem relevanten Frequenzintervall einen Mindestwert haben.

Dokument US 2006/281381 A1 offenbart Mehrschicht Verbund zur Verwendung als Membrane für elektroakustische Wandler, umfassend eine erste und eine zweite Deckschicht und eine zwischen diesen Deckschichten angeordnete Schicht einer Haftklebemassen, dadurch gekennzeichnet, dass die Haftklebemassen zurriindest eine Polymer-Komponente, eine Klebharz-Komponente, wobei die Polymer-Kompohente auf Polyacrylmonomeren basiert, und wobei die Polymerkomponente dadurch charakterisiert sind, dass die Polymeren ein zahlenmittleres Molekulargewicht M$_n$ von mindestens 50000 g/mol aufweisen.

Die in den heute marktüblichen Mehrschichtlaminaten verwendeten steifen Folien tragen selber sehr wenig zur Dämpfung bei. Dieses leistet vorliegend die weiche Zwischenschicht, in der Regel also die Haftklebemasse. Es ist daher vernünftig, Haftklebmassen auszuwählen, die einen hohen Verlustfaktor aufweisen. Der Verlustfaktor ist proportional zur internen Dämpfung.

Der mechanische Verlustfaktor tan $\delta$ eines viskoelastischen Materials - wie z.B. einer Haftklebmasse - kann durch dynamisch-mechanische Analyse (DMA) bestimmt werden. Dabei wird das zu untersuchende Material einer sinusförmigen Belastung ausgesetzt, die Antwort des Materials, in der Regel phasenverschoben und mit erniedrigter Amplitude, liefert ausgehend vom komplexen Schubmodul G* u.a. die Größen Speichermodul G', Verlustmodul G" und deren Quotienten tan $\delta$ (Verlustfaktor). Prinzip und Anwendung der DMA zur Charakterisierung von viskoelastischen Materialien sind in der Literatur ausführlich beschrieben. Die dynamisch-mechanischen Eigenschaften wie der mechanische Verlustfaktor einer viskoelastischen Haftklebmasse sind sowohl frequenz- als auch temperaturabhängig. Aus diesem Grund wird in der DMA typischerweise entweder die Frequenz konstant gehalten und das Materialverhalten bei unterschiedlichen Temperaturen betrachtet (Temperatur-Sweep) oder die Temperatur konstant gehalten und das Materialverhalten bei unterschiedlichen Frequenzen betrachtet (Frequenz-Sweep). Trägt man im Fall des Temperatur-Sweeps den mechanischen Verlustfaktors einer Haftklebmasse gegen die Temperatur auf, steigt der tan $\delta$-Wert typischerweise bis zu einer bestimmten Temperatur auf einen Maximalwert an und fällt dann bei höheren Temperaturen wieder ab. Dieser Maximalwert wird verbreitet als dynamischer Glasübergangspunkt definiert. Die Lage dieses Maximums hängt bei gleichen Messparametern (Frequenz, Temperatur) also direkt vom Glasübergangspunkt der verwendeten Haiftklebmasse ab.

Eine Möglichkeit, das Maximum des Verlustfaktors einer Haftklebmasse anzuheben, besteht in der Zugabe eines Klebharzes (Taickifier) zum Polymer. Ein Klebharz ist ein sehr verbreitet in Haftkliäbemassen eingesetztes Additiv, das im Regelfall eine klebkrafterhöhentie Vllirkung entfalten soll. Klebharze sind zumeist niedermolekulare Stoffe mit Erweichungspunkten oberhalb Raumtemperatur, die zur Entfaltung ihrer Wirkung zumindest teilweise mit der Elastomerkomponente des Haftklebers thermodynamisch verträglich sein müssen. Will man das Dämpfungsvermögen einer Haftklebemasse erhöhen, könnte man also versucht sein, dies durch die Beigabe eines Klebharzes zu bewirken.

In den meisten Fällen ist aber ein wesentlicher Effekt der Klebharze die Erhöhung der Glasübergangstemperatur der Haftklebemasse. Möchte man die erhöhende Wirkung eines Klebharzes auf das Verlustfaktor-Maximum der dämpfenden Haftklebeschicht nutzen, wird man es also gleichzeitig fast immer zu höheren Temperaturen verschieben. Das hat dann wiederum unmittelbaren Einfluss auf die Frequenzlage der internen Dämpfung und in der Folge auf die akustischen Eigenschaften der mehrschichtigen Lautsprechermembran. Zwar ließe sich prinzipiell ein Elastomer mit niedrigerer Glasübergangstemperatur verwenden, um den Anstieg bedingt durch das Klebharz zu kompensieren. In der Praxis schränkt dieser Ansatz die Handlungsfähigkeit bei der Auswahl geeigneter Komponenten allerdings sehr ein, weil das kommerzielle Angebot diesbezüglich lückenhaft ist. Technisch gesehen gibt es Einschränkungen bei der Auswahl insbesondere funktioneller Monomere. Weitere Motivationen, an einem, Basispolymer festzuhalten, sind wirtschaftliche Aspekte wie Komplexität und Einkaufsvolumen, aber auch technische Aspekte wie beispielsweise Lösemittelzusammensetzung und Motekutargewichtsverteitung, die die klebtechnischen Eigenschaften sowie die Verarbeitbarkeit wesentlich mit beeinflussen. Der Fachmann sieht aus diesen Gründen die Zugabe eines Klebharzes zur Dämpfungserhöhung bei solchen Klebmassen, die bei der Herstellung von Membranen für akustische Wandler zum Einsatz kommen, sehr kritisch.

Wünschenswert wäre es, eine grundsätzlich geeignete Haftklebemasse weitgehend selektiv in ihrer Dämpfung steigern und dabei gleichzeitig unabhängig davon die Temperaturlage des Verlustfaktor-Maximums einstellen zu können. Aufgabe der Erfindung ist es dementsprechend, das Dämpfungsvermögen einer Membran signifikant zu erhöhen, ohne die Stabilität der Membran selbst sowie deren Eignung für den Einsatz als Lautsprechermembran wesentlich zu verschlechtern.

Gelöst werden konnte die Aufgabe durch einen Mehrschicht-Verbund, wie es im Hauptanspruch beschrieben ist. Vorteilhafte Weiterentwicklungen einer solchen Membran und deren Verwendung sind Gegenstand der unter- und nebengeordneten Ansprüche.

Demgemäß betrifft die Erfindung einen Mehrschicht-Verbund, insbesondere zur Verwendung als Membran für elektroakustische Wandler, wobei das Laminat mindestens eine erste und eine zweite. Deckschicht sowie eine zwischen diesen Deckschichten angeordnete Haftklebemässenschicht umfasst. Die Haftklebemasse umfasst zumindest eine Polymer-Komponente, zumindest eine Harz-Komponente und zumindest ein Additiv mit weichmachender Wirkung. Weitere Komponenten können unter anderem Lösemittel, Dispersionsmittel oder ähnliches sein. In einer bevorzugten Ausführungsform besteht die erfindungsgemäß eingesetzte Haftklebemasse ausschließlich aus einer Polymer-Komponente aus einem oder mehreren Polymeren, einem Harz, einem Additiven mit weichmachender Wirkung und gegebenenfalls einem Lösungs- und Dispersionsmittel, dessen Anteil vorteilhaft weniger als 60 Gew.-% an der Haftklebemasse beträgt. In einer weiteren vorteilhaften Ausführungsform ist die vorstehende Ausführungsform derart modifiziert, dass die Harz-Komponente mehrere Harze enthält und/oder dass mehrere Additive mit weichmachender Wirkung beigemischt sind.

In weiteren Ausführungsformen kann die Haftklebemasse weitere Komponenten oder Additive aufweisen, insbesondere die dem Fachmann üblicherweise bekannten Substanzen wie Rheologieadditve, Entschäumer, Netzmittel, Verlaufshilfsmittel, Offenzeitverlängerer, Antioxidantien, Lichtschutzmittel oder Füllstoffe.

Es hat sich gezeigt, dass sich das Verlustfaktor-Maximum eines Baslspolymers bei geeigneter Kombination mit einem Klebharz und mit einem Additiv mit weichmachender Winkung deutlich steigern lässt und zugleich der Nachteil der unerwünschten Verschiebung der Temperaturlage des Maximums zu höheren Temperaturen vermieden werden kann. Zwar leisten in der Regel beide Komponenten allein schon einen Beitrag zur Dämpfungssteigerung, dennoch bietet erst die Kombination beider Komponenten den für die Justierung des Verlustfaktor-Maximums nötige Flexibilität und hat sich daher als besonders vorteilhaft für die Anwendung herausgestellt.

Die Lebensdauer der Membran hängt neben der Dämpfuhgsfähigkeit der Haftklebemasse wesentlich von der Belastbarkeit der beiden außen liegenden Polymerfolien ab. Der Zusatz eines Weichmachers wird vom Fachmann kritisch gesehen und wenn möglich vermieden, da er die Gefahr der Migration des Weichmachers in die steifen Außenfolien birgt und den ganzen Verbund damit in Bezug auf die mechanische Belastbarkeit der Membran schwächen kann.

Überraschenderweise hat sich aber herausgestellt, dass gerade die Kombination aus Polymer, Harz und weichmachendem Additiv zu einem unerwartet hohen Anstieg des tan $\delta$-Maximums und verbesserten akustischen Eigenschaften der Lautsprechermembran führt. Der naheliegende, zu befürchtende Nachteil im Lebensdauer-Test, in dem der Lautsprecher für längere Zeit dauerhaft mit hoher Leistung betrieben wird, konnte dabei nicht gefunden werden.

Die Polymere der Polymer-Komponente können nach bekannten Verfahren aus Lösung - insbesondere in organischen Lösemitteln, wie beispielsweise wie beispielweise Tetrahydrofuran, Dichlormethan, Trichlormethan, Toluol, Benzine, Aceton, Ethylacetat, Heptan (oder Mischungen aus vorgenannten) -, aus Dispersion - insbesondere in Wasser - oder üblicherweise schwieriger auch in Substanz hergestellt werden. Die Polymere werden dabei derart gewählt, dass ihr zahlenmittleres Molekulargewicht $M_n$ mindestens 50 000 g/mol beträgt (insbesondere für aus Lösemittel erhältliche Polymere) oder dass der mittels Soxhlet-Extraktion in Tetrahydrofuran (THF) bestimmte Gelwert der Polymerkomponente mindestens 35 % beträgt (insbesondere für aus Dispersion erhältliche Polymere).

Gerade aus Dispersion hergestellte Polymere sind für die erfindungsgemäß eingesetzte Haftklebemassen besonders vorteilhaft, da die üblichen Lösemittel häufig die eingesetzten Trägerfolien schädigen können. Hieraus können sich für die schließlich vörliegende Membran Nachteile in ihren Eigenschaften in Hinblick auf das akustische Verhalten, die Lebensdauer oder die Leistungsfähigkeit ergeben. Durch Einsatz von Polymeren aus wässriger Dispersion lässt sich dieser Effekt vermeiden.

Die Polymer-Komponente wird aus einem oder mehreren Polymeren gebildet, deren Gesamtzeit zu mindestens 50 Gew.-% auf Acrylmonomere zurückzuführen ist, also auf von der Acrylsäure oder von der Methacrylsäure abgeleitete Monomere (wie Acrylsäure, Methacrylsäure, Acrylsäureester, Methacrylsäureester).
Die Polymer-Komponente kann dabei gebildet sein

- ausschließlich durch ein oder mehrere Rein-Polyacrylate, also solchen, die zu hundert Prozent auf eines oder mehrere Acrylmonomere zurückzuführen sind,
- oder ausschließlich durch ein oder mehrere Polyacrylate, die ein Copolymer aus mindestens 50 Gew.-% eines oder mehrerer Acrylmonomere und einem oder mehreren weiteren, mit Acrylmonomeren copolymerisierbaren Monomeren; die keine Acrylmonomere sind, insbesondere vinylischen Monomeren (Monomere, die keine Acrylmonomeren sind, werden im folgenden als "Fremdmonomere" bezeichnet; Copolymere aus. Acrylmonomeren und Fremdmonomeren werden auch als "Nicht-Rein-Polyacrytate" bezeichnet),
- oder durch eine Mischung

   ◦ aus Rein-Polyacrylaten mit Nicht-Rein-Polyacrylaten,
   ◦ oder aus Rein-Polyacrylaten mit solchen Polymeren, die zu weniger als 50 Gew.-% auf Acrylmonomere zurückzuführen sind und/oder solchen, die nicht auf Acrylmonomere zurückzuführen
   (also aus Rein-Polyacrylaten mit solchen Polymeren hauptsächlich auf Basis von Fremdmonomeren und/oder solchen ausschließlich auf Basis von Fremdmonomeren),
   ◦ oder aus Nicht-Rein-Polyacrylaten mit solchen Polymeren, die zu weniger als 50 Gew.-% auf Acrylmonomere zurückzuführen sind und/oder solchen, die nicht auf Acrylmonomere zurückzuführen
   (also aus Nicht-Rein-Polyacrylaten mit solchen Polymeren hauptsächlich auf Basis von Fremdmonomeren und/oder solchen ausschließlich auf Basis von Fremdmonomeren),
   ◦ oder aus Rein-Polyacrylaten und Nicht-Rein-Polyacrylaten mit solchen Polymeren, die zu weniger als 50 Gew.-% auf Acrylmonomere zurückzuführen sind und/oder mit solchen Polymeren, die nicht auf Acrylmonomere zurückzuführen sind
   (also aus Rein-Polyacrylaten mit Nicht-Rein-Polyacrylaten und mit solchen Polymeren hauptsächlich auf Basis von Fremdmonomeren; aus Rein-Polyacrylaten mit Nicht-Rein-Polyacrylaten und mit solchen Polymeren ausschließlich auf Basis von Fremdmonomeren; oder aus Rein-Polyacrylaten mit Nicht-Rein-Polyacrylaten und mit solchen Polyrrieren hauptsächlich auf Basis von Fremdmonomere und mit solchen Polymeren ausschließlich auf Basis von Fremdmonomeren).

Die Polymere der Polymer-Komponente können vorteilhaft derart gewählt sein, dass sie in unvernetzter Form in den üblichen für Polyacrylate bekannten organischen Lösemitteln (wie beispielweise Tetrahydrofuran, Dichlormethän, Trichlormethan, Toluol, Benzine, Aceton, Ethylacetat, Heptan oder Mischungen aus vorgenannten) löslich sind.

Insbesondere für nicht vernetzt, molekulardispers lösliche Polymere, also beispielsweise solche aus Lösung oder aus Substanz hergestellte, lässt sich mittels Gelpermeationschromatographie ein zahlenmittleres Molekulargewicht $M_n$ und ein gewichtsmittleres Molekulargewicht $M_w$ bestimmen.
Bevorzugt weisen die für die Polymer-Komponente eingesetzten Polymere, insbesondere wenn sie aus Lösung oder aus Substanz hergestellt wurden, ein zahlenmittleres Molekulargewicht von mindestens 50 000 g/mol, sehr bevorzugt von mindestens 100 000 g/mol, auf.
Weiter bevorzugt beträgt das gewichtsmittlere Molekulargewicht der für die Polymer-Komponente eingesetzten Polymere mindestens 200 000 g/mol, bevorzugt mindestens 400.000 g/mol.

Angaben zu zahlen- und gewichtsmittleren Molekulargewichten ($M_n$ und $M_w$) in dieser Schrift beziehen sich auf die unvernetzten Polymere und auf die Bestimmung durch Gelpermeationschromatographie (GPC). Als Eluent wurde THF mit 0,1 Vol.-% Trifluoressigsäure eingesetzt. Die Messung erfolgte bei 25 °C. Als Vorsäule,wurde PSS-SDV, 5 μm, $10^3$ A ($10^{-4}$ mm), ID 8,0 mm x 50 mm verwendet. Zur Auftrennung wurden die Säulen PSS-SDV, 5 μm, $10^3$ Å ($10^{-4}$ mm) sowie $10^5$ Å (0,01 mm) und $10^6$ Å (0,1 mm) mit jeweils Innendurchmesser 8,0 mm und 300 mm Länge eingesetzt. Die Probenkonzentration betrug 4 g/l, die Durchflußmenge 1,0 ml pro. Minuten. Es wurde gegen PMMA Standards gemessen.

Alle Polymere der Polymer-Komponente oder ein Teil der Polymere der Polymer-Komponente können auch derart gewählt sein, dass sie in thermodynamisch guten Lösungsmitteln (wie die oben genannten organischen Lösemittel) wegen Vergelung überwiegend nicht löslich, sondern nur quellbar sind.

Insbesondere für Polymere, die aus Dispersion beispielsweise mit dem Verfahren der Emulsionspolymerisation hergestellt werden, kann es schwierig sein, ein zahlenmittleres Molekulargewicht $M_n$ oder $M_w$ zu ermitteln. Verfahrensbedingt bildet sich bei derart hergestellten Polymeren in der Regel ein polymeres Netzwerk (Gel), das zumindest einen wesentlichen Teil der Polymermenge einbezieht, aus. Ein aus Dispersion hergestelltes Polymer ist daher. in der Regel nur teilweise molekulardispers löslich, der Gelanteil ist nur quellbar. Dieser Gelanteil wird mit dem Verfahren der Gelpermeationschromatographie (GPC) nicht erfasst, weit er bei der Probenpräparation wegen seiner Größe abgeschieden wird oder - wenn er das GPC System passiert - oberhalb der Ausschlussgrenze liegt. Das bedeutet, dass das Molekül so groß ist, dass es nicht mehr nach Größe getrennt wird. Als Ergebnis einer GPC Messung eines üblichen Acrylatpolymers aus Dispersion bekommt man nur den löslichen Anteil, der allein nicht repräsentativ für das Molekulargewicht der ganzen Probe ist.

Für solche Polymere ist es daher vorteilhaft, den Gelanteil des Polymers bzw. der Polymere anzugeben. Angaben zum Gelanteil im Rahmen dieser Schrift beziehen sich auf die Bestimmung mittels Soxhlet-Extraktion in Tetrahydrofuran (THF). Dazu wird die Polymerdispersion bei 40°C im Ofen getrocknet und eine definierte Menge (ca. 1 g) davon in eine bei Normklima (23 ±1 °C, 50 ± 5 % relative Feuchte) über 24 h konditionierte, genau gewogene Extraktionshülse (Zellulose, Whatman Typ 603) gegeben. Diese wird anschließend über drei Tage in THF extrahiert und so der lösliche Anteil quantitativ extrahiert. Anschließend wird die Hülse mit dem Gel bei 40°C über 2 h im Ofen getrocknet und nach 24 h Konditionierung bei Normklima zurückgezogen. Aus der Differenz ergibt sich der Gelanteil des Polymers, also der in THF unlösliche Anteil.

Für die Polymerkomponente der erfindungsgemäß eingesetzten Haftklebemasse ist es vorteilhaft - insbesondere wenn die Polymerkomponente auf einem oder mehreren aus Dispersion erhaltenen Polymere, besonders Pölyacrylaten, beruht -, wenn der mittels Soxhlet-Extraktion in THF bestimmte Gelwert mindestens 35 % oder mehr beträgt, insbesondere mindestens 50 % oder mehr.

Die Polymer-Komponente ist derart zusammengesetzt, dass ihre Glasübergangstemperatur sehr bevorzugt unterhalt von + 5 °C liegt.

Alle Angaben zu Gläsübergarigstemperaturen in dieser Schrift erfolgen in Bezug auf die Dynamische Differenzkalorimetrie (Dynamic Scanning Calorimetry, DSC) nach DIN 53765. Das Messprogramm entspricht DIN 53765:1994-03 Abschnitt 7.1 einschließlich Anmerkung 1 mit einer einheitlichen Heiz- und Kühlrate von 10 K/min; der erste Aufheizschritt (1. Lauf) erfolgt beginnend bei einer Temperatur von - 140 °C bis auf + 150 °C; Halten der Temperatur für 5 min; Abkühlen auf - 140 °C; Halten der Temperatur für 5 min; erneutes Aufheizen analog dem ersten Aufheizschritt (2. Lauf). Die Auswertung erfolgt an der zweiten Aufheizkurve (2. Lauf); die Angaben zur Glasübergangstemperatur TG beziehen sich auf den Glasumwandlungstemperatur-Wert Tg nach DIN 53765:1994-03 (Hälfte der Änderung der spezifischen Wärmekapazität; vgl. Abschnitt 8.1), sofern im Einzelfall nichts anderes angegeben ist.

Die Glasübergangstemperatur von Polymeren, wie etwa von Polyacrylaten, kann durch eine entsprechende Auswahl der Monomere beeinflusst werden. Die Glasübergangstemperatur $T_G$ von ‚Copolymeren kann sehr gut durch Anwendung der Gleichung

$$\frac{1}{T_G} = \sum_n \frac{w_n}{T_{G,n}}$$

justiert werden (vgl. T.G. Fox, Bull. Am. Phys. Soc. 1 (1956) 123). Hierin bedeuten n die Laufzahl über die eingesetzten Monomere, $W_n$ den Massenanteil des jeweiligen Monomers n (in Gew.-%) und $T_{G,n}$ die jeweilige Glasübergangstemperatur des Homopolymers aus den jeweiligen Monomeren n (in K). Da Glasübergangstemperaturen von manchen Homopolymeren bis zu einer bestimmten oberen Grenzmolmasse von ihrer Molmasse abhängen können, erfolgt die Bezugnahme auf Glasübergangstemperaturen insbesondere auf solche Homopolymere, deren Molmassen oberhalb dieser Grenzmolmasse liegen, also im Glasübergangstemperatur-konstanten Bereich. Bestimmung der $T_G$ erfolgt nach Entfernung des Lösemittels im unvernetzten Zustand. Die Glasübergangstemperaturen von Homopolymeren einer Vielzahl von Monomeren kann vom Fachmann aus einschlägigen Listenwerken entnommen werden.

Für die Zusammensetzung der Klebemasse ist es sehr von Vorteil, wenn zumindest ein Teil, insbesondere der überwiegende Teil, der eingesetzten Monomere korrespondierende Homopolymere mit vergleichsweise niedrigen Glasübergangstemperatur hat, etwa von nicht mehr 5 °C, sehr bevorzugt von nicht mehr als - 10 °C.

Besonders bevorzugt einsetzen lassen sich hier etwa Acrylsäureester und/oder Methacrylsäureester der Formel $CH_2 = C(R^I)(COOR^{II})$, wobei $R^I$ = H oder $CH_3$ und $R^{II}$ ein Allylrest mit 2 bis 14 C-Atomen, besonders bevorzugt mit 4 bis 9 C-Atomen, ist. Aber auch einige Acrylmonomere mit längeren Alkylresten weisen niedrige Glasübergangstemperaturen auf. Grundsätzlich können die Alkylreste linear oder verzweigt, unsubstituiert oder substituiert sein.

Einige Beispiele für geeignete Monomere, deren Homopolymere vergleichsweise niedrige Glasübergangstemperturen aufweisen, sind

Ethylacrylat, n-Propylacrylat, n-Butylacrylat, n-Pentylacrylat, n-Hexylacrylat, n-Heptylacrylat, n-Octylacrylat, n-Nonylacrylat, n-Decylmethacrylat, n-Undecylacrylat, Dodecylacrylat (Laurylacrylat),

n-Pentytmethacrytat, n-Hexylrnethacrylat, n-Heptylmethacrylat, n-Octylmethacrylat, n-Nonylmethacrylat, n-Decylmethacrylat, n-Undecylmethacrylat, n-Dodecylmethacrylat (Laurylmethacrylat),

Isopropylacrylat, Isobutylacrylat, Isopentylacrylat, Isohexylacrylat, Isoheptylacrylat, Isooctylacrylat, Isononylacrylat, Isodecylacrylat, die verzweigten Isomere der vorgenannten Verbindungen, wie zum Beispiele 2-Ethylhexylacrylat, 2-Ethylbutylacrylat, 3-Propylheptylacrylat, 2-Ethylhexylmethacrylat, sec-Butylacrylat, sec-Butylmethacrylat.

Weiterhin kann es von Vorteil sein, wenn zum Teil auch solche Monomere eingesetzt werden, die einen anhebenden Einfluss auf die Glastemperatur des Polymers haben und/oder die zu einer Neigung zur Ausbildung teilkristalliner Bereiche im Polymer führen. Hierfür können beispielsweise solche Monomere gewählt werden, deren Homopolymere eine vergleichsweise hohe Glasübergangstemperatur besitzen, also insbesondere eine Glasübergangstemperatur solche über 5 °C, besonders über 20 °C.

Beispiele für vorteilhaft einsetzbare solche Monomere sind Methylaorylat, Methylmethacrylat, Ethylmethacrylat, n-Propylmethacrylat, n-Butylmethacrylat, tert-Butylacrylat, Benzylacrylat, Benzylmethacrylat, Phenylacrylat, Phenylniethacrylat, t-Butylphenylacrylat, t-Butylphenylmethacrylat, 4-Biphenylacrylat, 4-Biphenylmethacrylat, 2-Naphthylacrylat, Naphthylmethacrylat, Isobornylacrylat, Isobornylmethacrylat, Octadecylacrylat (Stearylacrylat).

Weitere Comonomere für Polyacrylate, die als Haftklebemasen zum Einsatz kommen sollen, sind beispielsweise

Tridecylacrylat, Behenylacrylat, Cyclohexylmethacrylat, Cyclopentylmethacrylat, Phenoxyethylacrlylat, Phenoxyethylmethacrylat, 2-Butoxyethylmethacrylat, 2-Butoxyethylacrylat, 3,3,5-Trimethylcyclohexylacrylat, 3,5-Dimethyladamantylacrylat, 4-Cumylphenylmethacrylat, Cyanoethylacrylat, Cyanoethylmethacrylat, 4-Biphenylacrylat, 4-Biphenylmet-tHacrylat, 2-Naphthylacrylat, 2-Naphthylmethacrylat, Tetrahydrofurfurylacrylat, Diethylaminoethylacrylat, Diethylaminoethylmethacrylat, Dimethylaminoethyl-acrylat, Dimethylaminbethylmethacrylat, 2-Butoxyethylacrylat, 2-Butoxyethylmethacrylat, 3-Methoxyacrylsäuremethylester, 3-Methoxybutylacrylat, Phenoxyethylacrylat, Phenoxyethylmethacrylat, 2-Phenoxyethylmethacrylat, Butyldiglykolmethacrylat, Ethylenglycolacrylat, Ethylenglycolmonomethylacrylat, Methoxy Polyethylenglykolmethacrylat 350, Methoxy Polyethylenglykolmethacrylat 500, Propylenglycolmonomethacrylat, Buto-xydiethytenglykolmethacrylat, Ethoxytriethylenglykolmethacrylat, Octafluoro-pentylacrylat, Octafluoropentylrne-thacrylat, 2,2,2-Trifluoroethylmethacrylat, 1,1,1,3,3,3-Hexafluoroisopropylacrylat, 1,1,1,3,3,3-Hexafluoroisopropylmethacrylat, 2,2,3,3,3-Pentafluoropropylmethacrylat, 2,2,3,4,4,4-Hexafluorobutylmethacrylat, 2,2,3,4,4,4-Heptafluorbbutylacrylat, 2,2,3,3,4,4,4-Heptafluorobutylmethacrylat, 2,2,3,3,4,4,5,5, 6,6,7,7,8,8,8-Pentadecafluorooctylmethacrylat.

Als Comonomere für Polyacrylate lassen sich auch weitere Acrylderivate einsetzen, wie beispielweise Acrylamide oder Acrylnitrile. Einige vorteilhafte Comonomere aus diesen Verbindungsklassen sind Dimethylaminopropylacrylamid, Dimethylaminopropyl-methacrylamid, $N$-(1-Methyl-undecyl)acrylamid, $N$-(n-Butoxymethyl)acrylamid, $N$-(Butoxy-methyl)methacrylamid, $N$-(Ethoxymethyl)acrylamid, $N$-(n-Octadecyl)acrylamid, weiterhin $N,N$-Dialkyl-substituierte Acrylamide, wie beispielsweise $N,N$-Dimethylacrylamid, $N,N$-Dimethylmethacrylamid, $N$-Benzylacrylamide, $N$-Isopropylacrylamid, $N$-$tert$-Butylacrylamid, $N$-$tert$-Octylacrylamid, $N$-Methylolacrylamid, $N$-Methylolmethacrylamid, Acrylnitril, Methacrylnitril,

Auch Makromonomere wie 2-Polystyrolethylmethacrylat (Molekulargewicht $M_w$ von 4 000 bis 13 000 g/mol), Poly(methylmethacrylat)ethylmethacrylat ($M_w$ von 2 000 bis 8 000 g/mol) können als Comonomere zum Einsatz kommen.

Damit die resultierenden Haftklebemassen eine hinreichende Kohäsion aufweisen, ist es sehr von Vorteil, wenn sie durch chemische Reaktion vernetzt werden. Daher werden bevorzugt ein Teil der Monomere (im folgenden als "funktionelle Monomere" bezeichnet) derart gewählt, dass sie funktionelle Gruppen aufweisen, insbesondere solche funktionellen Gruppen, die mit den Polymeren der Haftklebemasse und/oder mit weiteren an den Polymeren befindlichen funktionellen Gruppen und/oder mit funktionellen Gruppen von zugesetzten Vernetzersubstanzen (wie etwa polyfunktionellen Isocyanaten, polyfunktionellen Epoxiden oder dergleichen) Reaktionen einzugehen vermögen, insbesondere nach geeigneter initiierung (etwa thermisch und/oder durch aktinische Bestrahlung, wie Bestrahlung mit UV-Licht und/oder mit Elektronenstrahlen).

Funktionelle Gruppen, die mit Isocyanatgruppen, Epoxidgruppen oder dergleichen reagieren können, sind beispielsweise Hydroxy-, Carboxy-, Sulfonsäure- oder Phosphonsäuregruppen, Säureanhydride, Epoxide, Amine.

Beispiele für sehr bevorzugt einsetzbare funktionelle Monomere sind

Acrylsäure, Methacrylsäure, Itaconsäure, Maleinsäure, Fumarsäure, Crotonsäure, Aconitsäure, Dimethylacrylsäure, β-Acryloyloxypropionsäure, Trichloracrylsäure, Vinylessigsäure, Vinylphosphonsäure, Maleinsäureanhydrid, Hydroxyethylacrylat, Hydroxypropylacrylat, Hydroxyethylmethacrylat, Hydroxypropylmethacrylat, 6-Hydroxyhexylmethacrylat, Allylalkohol, Glycidylacrylat, Glycidylmethacfylat.

Die Menge der eingesetzten funktionellen Monomere wird insbesondere in Hinblick auf die gewünschte Vernetzungsmethode, die ggf. eingesetzten Vernetzersubstanzen und den gewünschten Vernetzungsgrad ausgewählt.

Für die strahleninduzierte Vernetzung kann es von Vorteil sein, wenn ein Teil der eingesetzten Monomere funktionelle Gruppen enthalten, die initiierend bezüglich einer strahlenchemischen Vernetzung wirken; insbesondere copolymerisierbare Photoinitiatoren.

Geeignete copolymerisierbare Photoinitiatoren sind zum Beispiel Benzoinacrylat und acrylatfunktionalisierte Benzophenonderivate.

Monomere, die eine Vernetzung durch Elektronenbestrahlung unterstützen, sind zum Beispiel Tetrahydrofurfurylacrylat, N-*tert*-Butylacrylamid und Allylacrylat.

Als Comonomere zu den Acrylmonomeren lassen sich weiterhin mit Acrylmonomeren copolymerisierbare nichtacrylische Monomere (im Folgenden als "Fremdmonomere" bezeichnet) einsetzen, wobei dem Fachmann hier eine große Auswahl an Monomeren zur Verfügung steht, um die Eigenschaften des resultierenden Polymers und der darauf basierenden Haftklebemasse feinzujustieren. Grundsätzlich sind mit Acrylmonomeren solche Verwindungen copolymerisierbar, die eine oder mehrere copolymerisierbare aliphatische Doppelbindungen aufweisen (solche Verbindungen werden häufig auch als "ethylenisch ungesättigte Verbindungen" bezeichnet).

Der Anteil der Fremdmonomere ist weitgehend frei wählbar, so kann ihr Anteil an den Polymeren der Haftklebemasse beispielsweise bis zu 50 Gew.-%, grundsätzlich aber auch mehr, betragen.

Auch die Fremdmonomere lassen sich in Hinblick auf ihren gewünschten Einfluss auf die Glasübergangstemperatur der Haftklebemasse vorteilhaft auswählen. Zu den vorteilhaft einsetzbaren Fremdmonomeren zählen zum Beispiel aliphatische Vinylverbindungen und Vinylaromaten. Beispielhaft seien genannt. Vinylester, Vinylether, Vinylhalogenide, Vinylidenhalogenide, Vinylverbindungen mit aromatischen Cyclen und Heterocyclen, insbesondere in $\alpha$-Stellung zur Doppelbindung. Besonders bevorzugt geeignete Fremdmonomere sind beispielsweise Vinylacetat, Vinylformamid, Vinylpyridin, Vinylmethylether. Vinylisobutylether, Ethylvinylether, Vinylchlorid, andere Vinylhalogenide, Vinylidenchlorid, andere Vinylidenhalogenide, Acrylnitril.

Insbesondere als die Glasübergangstemperatur hebende Fremdmonomere lassen sich beispielsweise Vinylpyridin, 4-Vinylpyridin, N-Vinylphthalimid, Styrol, $\alpha$-Methylstyrol, p-Methylstyrol, $\alpha$-Butylstyrol, 4-n-Butylstyrol, 4-n-Decylstyrol, 3,4-Dimethoxystyrol und 4-Vinylbenzoesäure einsetzen.

Die Haftklebemasse umfasst weiterhin eine Harz-Komponente, die durch eines oder mehrere Klebharze gebildet wird und die insbesondere derart mit der Polymer-Komponente homogen mischbar ist, dass sich bei Vermischung eine gemeinsame Phase ausbildet.

Als Klebharze im Sinne dieser Schrift werden oligo- und polymere Verbindungen mit einem zahlenmittleren Molekulargewicht $M_n$ von nicht mehr als 10 000 g/mol verstanden. Diese Verbindungen weisen regelmäßig einen Gelwert von Null auf, da sie in THF löslich sind. Bevorzugt beträgt das zahlenmittiere Molekulargewicht der erfindungsgemäß eingesetzten Klebharze nicht mehr als 5 000 g/mol.

Die eingesetzten Klebharze weisen insbesondere mindestens die Glasübergangstemperatur der jeweils eingesetzten Polymer-Komponente auf. Üblicherweise ist ihre Glasübergangstemperatur höher als die der Polymer-Komponente, so dass die Glasübergangstemperatur der Polymer-Klebharz-Mischung höher liegt als bei der klebharzfreien Polymer-Komponente. Grundsätzlich lassen sich erfindungsgemäß alle solche Harze auswählen, deren Glasübergangstemperatur dieser Bedingung genügt. Hierzu kann es beispielsweise vorteilhaft sein, wenn die Glasübergangstemperatur der eingesetzten Klebharze mehr als 5 °C beträgt.

In einer sehr bevorzugten Weise werden als Klebharze ein oder mehrere Harze unabhängig voneinander gewählt aus der folgenden Gruppe gebildet aus Kolophonium, Kolophoniumderivaten, Terpenphenotharzen, Polyterpenhazen, Alkylphenolharzen, aliphatischen Kohlenwasserstoffharzen - insbesondere C5-Kohlenwasserstoffharzen -, aromatischen Kohlenwasserstoffharzen - insbesondere C9-Kohlenwasserstoffharzen -, aliphatisch-aromatischen Kohlenwasserstoffharzen - insbesondere C5/C9-Kohlenwasserstoffharzen. Die Harze, insbesondere die Kohlenwasserstoffharze (besonders die C5-Kohlenwasserstoffharze und/oder die C9-Kohlenwasserstoffharze und/oder die C5/C)-Kohlenwasserstoffharze) - können auch teilhydriert oder vollständig hydriert eingesetzt werden.

Die Wirkung der Klebharze liegt in der Steigerung der Anfassklebrigkeit (Tack) der Haftklebemasse, indem der viskose Anteil der viskoelastischen Eigenschaften einer Haftklebemasse gestärkt wird. Eine als Klebharz geeignete Substanz sollte insbesondere vorteilhaft folgende drei Kriterien erfüllen:

a) sie sollte mit dem Basispolymer der Haftklebemasse ausreichend thermodynamisch verträglich sein,
b) sie sollte im Vergleich zum Basispolymer der Haftklebemasse niedermolekular sein,
c) ihre Glasübergangstemperatur sollte oberhalb der Polymer-Komponente der Haftklebemasse liegen.

Die Auswahl der Klebharze erfolgt erfindungsgemäß insbesondere vorteilhaft derart, dass sie in Hinblick auf die vorgelegte Polymer-Komponente alle drei Kriterien erfüllen. Erfindungsgemäß lassen sich natürliche und/oder synthetische Harze einsetzen. Die Harze können als Reinsysteme in fester oder flüssiger Form (als Festharze, Flüssigharze, Weichharze, Hartharze), als Mischungen mit weiteren Komponenten oder als Dispersion eingesetzt werden.

Die Harze werden bevorzugt in einer Gesamtmenge von 1 bis 50 Gewichtsteilen (Gew.-Teilen) auf 100 Gewichtsteile des Basispolymers eingesetzt. Sehr bevorzugt werden 1 bis 35 Gew.-Teile Harz auf 100 Gew.-Teile des Basispolymers eingesetzt.

Als weitere Komponente umfasst die Klebemasse eines oder mehrere Additive, die unabhängig voneinander gewählt sind aus der Gruppe gebildet aus $C_2$- bis $C_{14}$-Alkylester von Carbonsäuren; $C_2$- bis $C_{14}$-Arylester von Carbonsäuren; $C_2$- bis $C_{14}$-Allylester anorganischer Säuren; $C_2$- bis $C_{14}$-Arylester anorganischer Säuren; Polyester organischer Säuren; Polyalkylenglycblether; epoxidiertes Sojabohnenöl; Alkansutfonsäurephenylester mit Alkylresten von $C_{10}$ bis $C_{21}$; Alkandisulfonsäurediphenylester mit Alkylresten von $C_{10}$ bis $C_{21}$.

Werden ausschließlich oder zusammen mit anderen Additiven $C_2$- bis $C_4$-Alkylester von Carbonsäuren und/oder $C_2$- bis $C_{14}$-Arylester von Carbonsäuren als Additiven eingesetzt, ist es erfindungsgemäß günstig, für alle eingesetzten Ester oder bei einem Teil der eingesetzten Ester die jeweiligen Ester der Phthalsäure, der 1,2-Cyclohexandicarbonsäure, der Terephthalsäure, der 1,4-Cyclohexandicarbonsäure, der Benzoesäure, der Cyclohexan-carbonsäure, der Glutarsäure, der Adipinsäure, der Azelainsäure, der Sebazinsäure, der Trimellitsäure, der Zitronensäure und/oder der Acetylzitronensäure zu wählen.

Werden ausschließlich oder zusammen mit anderen Additiven $C_2$- bis $C_{14}$-Alkylester und/oder $C_2$- bis $C_{14}$-Arylester von anorganischen Säuren eingesetzt, so ist es erfindungsgemäß günstig, die Ester der Phosphorsäure zu wählen.

Werden ausschließlich oder zusammen mit anderen Additiven Polyester organischer Säuren eingesetzt, so ist es erfindungsgemäß vorteilhaft, für alle eingesetzten Ester oder bei einem Teil der eingesetzten Ester die jeweiligen Ester der Adipinsäure, der Sebazinsäure, der Azelainsäure und/oder der Phthalsäure zu wählen, wobei die Polyester insbesondere in flüssiger Form vorliegen und gewichtsmittlere Molekulargewichte $M_w$ von nicht mehr als 20 000 g/mol aufweisen.

Die Additive haben eine weichmachende Wirkung auf die Klebemasse. Sie werden derart gewählt, dass sie als äußere Weichmacher fungieren, also derart dem Basispolymer hinzugefügt werden können, dass sie mit diesem und dem Harz eine einzige Phase bilden. Die weichmachende Wirkung beruht insbesondere auf der Verringerung der Polymer-Polymervvechselwirkung gegenüber dem reinen Polymer und führt infolgedessen zur Senkung von Viskosität, Glasübergangstemperatur und Elastizitätsmodul. Die weichmachenden Additive werden derart gewählt; dass ihren Glasübergangstemperatur unterhalb derjenigen der jeweils vorliegenden Polymer Komponente liegt. In bevorzugter Weise liegt die Glasübergangstemperatur des weichmachenden Additivs mit der höchsten Glasübergangstemperatur zumindest 5 °C, bevorzugt zumindest 10 °C niedriger als die Glasübergangstempertur des Harzes mit der niedrigsten Glasübergangstemperatur.

Die weichmachenden Additive werden bevorzugt in einer Gesamtmenge von 1 bis 50 Gewichtsteilen (Gew.-Teilen) auf 100 Gewichtsteile des Basispolymers eingesetzt. Sehr bevorzugt werden 1 bis 35 Gew.-Teile Weichmacher auf 100 Gew.-Teile des Basispolymers eingesetzt.

Eine besonders bevorzugte Ausführungsform der Erfindung ist somit ein Mehrschicht-Verbund zur Verwendung als Membran für elektroakustische Wandler, umfassend eine, erste und eine zweite Deckschicht und eine zwischen diesen Deckschichten angeordnete Schicht einer Haftklebemasse, wobei die Haftklebemasse zumindest eine Polymer-Komponente, eine Klebharz-Komponente und ein weichmachendes Additiv enthält, wobei die Polymer-Komponente zu mindestens 50 Gew.-% auf Polyacrylmonomeren basiert, und wobei die Polymerkomponente dadurch charakterisiert sind,

A) dass die Polymeren ein zahlenmittleres Molekulargewicht $M_n$ von mindestens 50 000 g/mol aufweisen oder

B) dass der mittels Soxhlet-Extraktion in Tetrahydrofuran bestimmte Gelwert der Polymerkomponente mindestens 35 % beträgt,

wobei als Klebharze solche polymeren Verbindungen eingesetzt werden, deren zahlenmittleres Molekulargewicht nicht mehr als 10 000 g/mol beträgt, und ganz oder teilweise gewählt werden aus der Liste gebildet aus Kolophonium, Kolophoniumderivaten, Terpenphenolharzen, Polyterpenharzen, Alkylphenolharzen, aliphatischen C5-Kohlenwasserstoffharzen, aromatischen C9-Kohlernivasserstoffharzen, aliphatisch-aromatischen C5/C9-Kohlenwasserstoffharzen,

und wobei das weichmachende Additiv gewählt ist aus der Liste gebildet aus $C_2$- bis $C_{14}$-Alkylester von Carbonsäuren; $C_2$- bis $C_{14}$-Arylester von Carbonsäuren; $C_2$- bis $C_{14}$-Alkylester anorganischer Säuren; $C_2$- bis $C_{14}$-Arylester anorganischer Säuren; Polyester organischer Säuren; Polyalkylenglycolether; epoxidiertes Sojabohnenöl; Alkansulfonsäurephenylester mit Alkylresten von $C_{10}$ bis $C_{21}$; Alkandisulfonsäure-diphenylester mit Alkylresten von $C_{10}$ bis $C_{21}$, wobei die Carbonsäuren gegebenenfalls eingesetzter $C_2$- bis $C_{14}$-Alkylester und der $C_2$- bis $C_{14}$-Arylester ganz oder teilweise gewählt sind aus der Liste gebildet aus Phthalsäure, 1,2-Cyclohexandicarbonsäure, Terephthalsäure, 1,4-Cyclohexandicarbonsäure, Benzoesäure, Cyclohexancarbonsäure, Glutarsäure, Adipinsäure, Azelainsäure, Sebazinsäure, Trimellithsäure, Zitronensäure, Acetylzitronensäure, wobei weiterhin als anorganische Säure gegebenenfalls eingesetzter $C_2$- bis $C_{14}$-Alkylester und gegebenenfalls eingesetzter $C_2$- bis $C_{14}$-Arylester ganz oder teilweise Phosphorsäure gewählt ist, und wobei weiterhin die Carbonsäuren gegebenenfalls eingesetzter Polyester ganz oder teilweise gewählt aus der Liste gebildet aus Adipinsäure, Sebazinsäure, Azelainsäure, Phthalsäure, und die Polyester ein zahlenmittleres Molekulargewicht $M_n$ von nicht mehr als 20 000 g/mol aufweisen.

Die Haftklebemassenschicht kann als Dämpfungsschicht fungieren. Für die Erzielung der dämpfungserhöhenden Wirkung ist die thermodynamische Verträglichkeit zwischen Polymer und Harz sowie weichmachendem Additiv, d.h. die Ausprägung einer einzigen homogenen Phase des mehrkomponentigen Gemisches, sehr von Vorteil. Die Ausbildung einer einzigen homogenen Phase lässt sich einfach rheologisch überprüfen, da in diesem Fall der Zusatz der jeweiligen Komponente - Harz- oder Additiv - zu der erfindungsgemäß gewünschten Erhöhung des Verlustfaktor-Maximums führt. Es wurde festgestellt, dass höhere Additivmengen prinzipiell eine höhere Dämpfung, also eine Erhöhung des Verlustfaktor-Maximums, bewirken. Durch die übrigen Anforderungen an die Klebemasse lassen sich diese Additivmengen jedoch nicht beliebig steigern.

Im Falle einer Nichtverträglichkeit der vermischten Komponenten stagniert oder verringert sich die Höhe des Maximums. Insbesondere bei der Zugabe von nichtverträglichen Harzen zur Polymer-Komponente bildet sich mitunter sogar ein zweites Verlustfaktor-Maximum als Zeichen einer Zweiphasigkeit aus.

Durch die geeignete Wahl der Mengen der Polymer-Komponente, der Harz-Komponente und des einen oder der mehreren weichmachenden Additive gelingt es, Haftklebemassen mit den gewünschten Dämpfungs- und Frequenzverhalten besonders vorteilhaft einzustellen. Es ist dem Fachmann möglich, nach Auswahl der jeweiligen Substanzen für die erfindungsgemäß erforderliche, insbesondere thermodynamisch verträglichen Komponenten mit zumutbar wenigen Versuchen das jeweils geeignete Harz-Weichmacherverhältnis insbesondere im Rahmen der angegebenen Mengenverhältnisse zu ermitteln, das zu vorteilhaften Eigenschaften, insbesondere zu einer annähernden Konstanz oder bewusst angestrebten Abweichung der Glasübergangstemperatur der Polymer/HarzNlleichmachermlschung führt.

Die Dicke der Haftklebeschicht als Dämpfungsschicht und verbindendes Element zwischen den Folien im Mehrschicht-Verbund beträgt zwischen 5 und 100 $\mu$m; bevorzugt zwischen 5 und.50 $\mu$m, ganz besonders bevorzugt zwischen 10 und 40 $\mu$m.

Als Deckschichten für einen Mehrschicht-Verbund im Sinne- dieser Erfindung kommen Folien in Frage, deren Hauptbestandteil ausgewählt ist aus der Gruppe Polypropylen (PP), Polyethylenterephthalat (PET), Polybutylenterephthatat (PBT), Polycarbonat (PC), Polyurethan (PU), Thermoplastisches Polyurethan (TPU), Polyethylennaphthalat (PEN), Polyphenylensulfid (PPS), Polyimid (PI) Polyphenylsulfon (PPSU), Polyethersulfon (PES), Polysulfon (PSU), Polyetherimid (PEI), Polyarylat (PAR), Polyetheretherketon (PEEK) oder anderer Polyaryletherketone (PAEKs). Aufgrund der oben beschriebenen starken Erwärmung der Mikrolautsprecher-Membranen im Gebrauch werden bevorzugt steife Folien aus Hochleistungskunststoffen mit einer hohen Teniperaturbeständigkeit wie PEN, PPS, PEI, PAR oder PEEK eingesetzt. Die Dicken der beiden Außenschichten liegen im Bereich 1 bis 50 $\mu$m, bevorzugt im Bereich 1 bis 20 $\mu$m, besonders bevorzugt im Bereich 1 bis 10 $\mu$m. Die Deckschichten auf beiden Seiten der Dämpfungsschicht können in Dicke und Zusammensetzung identisch oder voneinander unterschiedlich sein.

Zur Herstellung des Mehrschichtaufbaus wird die Haftklebemasse entweder direkt auf eine der beiden Folienschichten in der gewünschten Schichtstärke mit den dem Fachmann geläufigen Auftragsverfahren aufgetragen oder indirekt durch Beschichtung eines temporären Transferträger wie silikonisiertem Papier oder silikonisierter Folie, Kaschieren mit der ersten der beiden Folienschichten und Ausdecken des temporären Transferträgers. Die zweite der beiden Folienschichten kann direkt zur haftklebrigen Seite des einseitig kaschierten Verbundes zugeführt werden. Zur Erzielung einer sicheren Verbundhaftung und zum Vermeiden von Lufteinschlüssen eignen sich Kaschiereinrichtungen, die die Materialbahnen zwischen Gummizylindern bzw. einem Stahl und einem Gummizylinder mit variabel einstellbarem Anpressdruck kontinuierlich verbinden.

Die Herstellung von Membranen für elektroakustische Wandler, insbesondere Lautsprechermembranen, erfolgt beispielsweise durch Prägen oder Tiefziehen eines erfindungsgemäßen Mehrschicht-Verbundes, wodurch dieser Verbund in eine spezifische dreidimensionale Form gebracht wird. Hierzu wird der Mehrschicht-Verbund beispielsweise in einer Thermoform erwärmt und durch Anlegen von Druck und/oder Vakuum in die Form der fertigen Membran gepresst. Die erfindungsgemäßen Mehrschicht-Verbunde lassen sich hervorragend in einem Verfahren zur Herstellung von Membranen für elektroakustische Wandler einsetzen, wobei sie dem Prozess des Multicavity-Thermoformens unterzogen werden. Bei diesem Verfahren wird das Mehrschicht-Laminat auf die beheizbare Thermoform gelegt, die Vertiefungen mit dem Negativ-Abdruck der zu formenden Membran enthält. Anschließend wird das. Mehrschicht-Laminat z.B. durch IR-Strahlung aufgeheizt und dadurch erweicht und dann von oben mit Druckluft in die Vertiefungen gepresst. Alternativ kann das erweichte Mehrschlcht-Laminat auch mit einem Stempel, aus Silikon oder geschäumtem Silikon in die Formen gepresst werden.

**Beispiele, Vergleichsbeispiele**

Der Erfindungsgedanke soll im Folgenden an mehreren Beispielen und Gegenbeispielen erläutert werden, ohne die Erfindung damit einschränken zu wollen.

*Testkriterien*

Wie vorhergehend ausgeführt, ist das Ziel, ein hohes Maximum des Verlustfaktors der Haftklebemassen bei nur gering veränderter oder sogar gegenüber dem Basispolymer geringerer Temperaturlage.

Zur Verdeutlichung des Erfindungsgedankens werden daher die folgenden Kriterien für die Beurteilung der Eignung der Beispiele und Gegenbeispiele herangezogen:

1. Temperaturlage des Verlustfaktor Maximums
2. Höhe des Verlustfaktor Maximums

*Temperaturlage und Höhe des Verlustfaktor (tangens delta) Maximums*

Diese Größen wurden durch dynamisch mechanische Analyse (DMA) an einem Rheometer des Typs Rheometric Scientific, RDA 111 mit federgelagertem Messkopf und Heizkammer zwischen parallelen Platten mit 25 mm Durchmesser mittels eines Temperatursweeps bestimmt. Die Probendicke betrug 1 ($\pm$0,1) mm, die Meßfrequenz 10 rads. Der Temperaturbereich des Temperatursweeps reichte von-40 °C bis +130 °C bei einer Aufheizrate Von 2,5 °C/min und einer Deformation von 1 %.

Die Prüfkörper wurden aus fünf Schichten der zu untersuchende Haftklebemasse zusammenlaminiert, die jeweils so auf silikonisiertem Papier ausgestrichen horden waren, dass nach dem Trocknen über 15 Minuten bei 80 °C ein Flächengewicht von etwa 200 g/m$^2$ resultierte.

Als Temperaturlage des Verlustfaktors wurde das Maximum der tangens delta Kurve im oben genannten Temperaturintervall in der Einheit °C und als Größe des Verlustfaktors der tangens delta Wert an dem Maximum (dimensionslos) definiert.

*Herstellung der Acrylatdispersionsbasismasse*

Für die Polymerisation der Acrylatdispersionshaftklebemasse wurde das Emulsionspolymerisationsverfahren in einem temperierbare 1,51 Glasreaktor mit Rührer angewendet. Der Reaktor wurde auf 80 °C temperiert und während der gesamten Reaktionszeit mit einem stetigen Stickstoffstrom inertisiert.

Zur Herstellung einer Monomerpräemulsion wurden zunächst 240 g Wasser in einem Rundkolben vorgelegt und zwanzig Minuten Stickstoff durchgeleitet. Anschließend kamen 420 g 2-Ethylhexylacrylat, 40 g Methylmethyäcrylat, 35 g Vinylacetat und 5 g Acrylsäure zusammen mit 45 g Emulgator des Typs Natriumnonylphenolpolyethylenglycolsulfat (Disponil AES 60, BASF, 35 % wässrige Lösung) hinzu. Die Emuigierung erfolgte durch einminütiges Homogenisieren mit einem Ultraturrax bei 18.000 Umdrehungen pro Minute.

Eine Initiatorlösung wurde durch Auflösen von 1,5 g Ammoniumperoxodisulfat in 80 g Wasser hergestellt.

In den Reaktor wurden 150 g Wasser sowie 1,5 ml Acetatpuffer mit pH 4,6 (Fluka) vorgelegt und gelöster Sauerstoff durch zwanzigminütiges Spülen mit Stickstoff entfernt. Nach Temperierung des Wassers auf 80 °C wurde eine Saat durch Zugabe von 22 g Monomerpräemulsion und 5 ml Initiatorlösung über 10 Minuten unter Rühren polymierisiert.

Anschließend wurden Monomerpräemulsion und Initiatorlösung mit Dosierpumpen kontinuierlich so zugeführt, dass nach 3 Stunden die Vorratsgefäße etwa gleichzeitig aufgebraucht waren. Nach einer halben Stunde Rühren bei 80 °C wurde 3 ml Wasserstoffperoxidlösung (30 %) hinzugegeben und eine weitere halbe Stunde gerührt.

Die Dispersion mit etwa 49,8 % Feststoffgehalt wurde abgekühlt und über ein Filtergewebe mit 100 $\mu$m Maschenweite von etwaigem Koagulat befreit. Mittels Soxhlet-Extraktion in THF (oben definierte Methode) wurde ein Gelanteil von 76 % ermittelt. Mit DSC wurde eine Glasübergangstemperatur von -45 °C ermittelt. Dieses Basispolymer wird im Folgenden als "wbAc" bezeichnet.

*Herstellung der Lösemittelacrylatbasismasse*

Zur Herstellung der lösemittelbasierten Acrylathaftklebemasse wurde ein für radikalische Polymerisationen unter Siedekühlung geeigneter konventioneller 2 L-Glasreaktor mit 300 g einer Monomermischung, enthaltend 142,5 g Butylacrylat, 142,5 g Ethylhexylacrylat und 15 g Acrylsäure, und 200 g Aceton:Siedegrenzenbenzin 60/95 (1:1) befüllt. Nach 45 Minuten Durchleiten von Stickstoffgas unter Rühren wurde der Reaktor auf 58 °C hochgeheizt und 0,15 g 2,2'-Azodi(2-methylbutyronitril (Vazo 67®, Fa. DuPont), gelöst in 6 g Aceton, hinzugegeben. Anschließend wurde das äußere Heizbad auf 75 °C erwärmt und die Reaktion konstant bei dieser Außentemperatur durchgeführt. Nach 1 h Reaktionszeit wurde wiederum 0,15 g VAZO 67®, gelöst in 6 g Aceton, hinzugegeben. Nach 3 Stunden wurde mit 90 g Aceton/Siedegrenzenbenzin 60/95 (1:1) verdünnt.

Nach fünfeinhalb Stunden Reaktionszeit wurden 0,45 g Bis-(4-tert.-Butylcyclohexanyl)-Peroxy-dicarbonat (Perkadox 16®, Fa Akzo Nobel), gelöst in 9 g Aceton, hinzugegeben. Nach 7 Stunden Reaktionszeit wurden weitere 0,45 g Bis-(4-tert.-Butylcyclohexanyl)-Peroxy-dicarbonat (Perkadox 16®, Fa Akzo Nobel), gelöst in 9 g Aceton, hinzugegeben. Nach 10 Stunden Reaktionszeit wurde mit 90 g Aceton/Siedegrenzenbenzin 60/95 (1:1) verdünnt. Die Reaktion wurde nach 24 h Reaktionszeit abgebrochen und auf Raumtemperatur abgekühlt. Das zahlenmittlere Molekulargewicht des erhaltenen Polymers lag bei $M_n$ = 107.000 g/mol, das gewichtsmittlere Molekulargewicht bei $M_w$ = 930.000 g/mol. Anschließend wurde zur Herstellung der einzelnen Untersuchungsmuster dem so hergestellten Polymerisat 0,3 % Gew.-% Aluminiumacetylacetonat (3 % Lösung in Aceton) als Vernetzer bezogen auf den Feststoffgehalt des Polymers beigegeben. Mit DSC wurde eine Glasübergangstemperatur von -48 °C ermittelt.

Dieses - mit Ausnahme des Vernetzers - additivfreie Basispolymer wird im Folgenden als "sbAc" bezeichnet.

*Abmischen der Haftklebemassen mit Harzen und Additiven*

Die Basispolymere wurden, wo nach den Angaben in Tabelle 1 bzw. Tabelle 2 gefordert, mit den Additiven gemäß den in den Tabellen 1 und 2 genannten Mengenverhältnissen (alle Mengenangaben in Gewichtsteilen) abgemischt. Nach 24 h milder Bewegung auf einer Rollbank waren alle Massebestandteile der sbAc Abmischungen homogen gelöst. Alle genannten Rezepturen beziehen sich auf die Feststoffgehalte, also die Mengenanteile ohne Lösemittel.

Für die Acrytätdispersion wurden Harzdispersionen verwendet. Das weichmachende Additiv wurde als flüssige Substanz eindösiert. Mit einem Propellerrührer wurde durch fünfminütiges Rühren eine gleichmäßige Verteilung im Volumen bewirkt. Nach 24 h Wartezeit hatten die Dispersionspartikel den Weichmacher absorbiert.

Bei Harzdispersionen handelte es sich um disproportionierte Kolophoniumglycerinester. Das Harz "rosin ester low sp" (Snowtack® 0724G, Lawter) mit einem Feststoffgehalt von 51 % hatte eine Glasübergangstemperatur nach DSC von -17 °C und ein Molekulargewicht $M_n$ = 523 g/mol, das Harz "rosin ester high sp" (Snowtack® 100G, Lawter) mit einem Feststoffgehalt von 56,5 % eine von 47 °C und ein Molekulargewicht $M_n$ = 860 g/mol.

Als weichmachendes Additiv wurde Tributylcitrat verwendet (Citrofol B1®, Jungbunzlauer).

Das aus Lösungsmittelpolymerisation hergestellte Polyacrylat wurde, wo gefordert, direkt mit einem Terpenphenolharz "TP resin" (Sylvares® TP95, Arizona Chemical) mit einer Glasübergangstemperatur von 46 °C und/oder dem jeweiligen weichmachenden Additv, das als flüssige Substanz eingesetzt wurde, abgemischt. Die Additive hatten sich im Lösemittelgemisch nach einigen Stunden milder Bewegung auf einer Rollbank aufgelöst und homogen verteilt. Als weichmachende Additve kamen ebenfalls Tributylcitrat sowie ein Polytetramethylenetherglykol mit einem zahlenmittleren Molekulargewicht von ca. 2000 g/mol (PolyTHF® 2000, BASF) zum Einsatz.

Die Ergebnisse der beiden Kriterien Temperaturlage des Verlustfaktor-Maximums ("T bei tan delta Max") und Höhe des Verlustfaktor-Maximums ("Höhe von tan delta Max") sind zusammen mit den Rezepturen in den Tabellen 1 und 2 zusammengefasst.

Tabelle 1: Zusammensetzung der Rezepturen mit der Acrylatdispersionsbasismasse wbAc in Gewichtsteilen sowie die Ergebnisse zur Temperaturlage und Dämpfung.

| Beispiel / Bestandteile | 1 (V) | 2 (V) | 3 (V) | 4 | 5 | 6 | 7 | 8 |
|---|---|---|---|---|---|---|---|---|
| wbAc | 100 | 100 | 100 | 100 | 100 | 100 | 100 | 100 |
| rosin ester low sp | | | | | 20 | 20 | 30 | |
| rosin ester high sp | | 25 | | 20 | | | | 40 |
| Tributylcitrat | | | 10 | 5 | 3 | 5 | 10 | 20 |
| **Messergebnisse** | | | | | | | | |
| T bei tan delta Max (°C) | -23 | -8 | -31 | -22 | -22 | -24 | -26 | -22 |
| Höhe von tan delta Max | 1,40 | 1,75 | 1,70 | 1,85 | 1,90 | 1,90 | 2,00 | 2,55 |

Tabelle 2: Zusammensetzung der Rezepturen mit der Lösemittelacrylatbasismasse sbAc in Gewichtsteilen sowie die Ergebnisse zur Temperaturlage und Dämpfung.

| Beispiel / Bestandteile | 9 (V) | 10 (V) | 11 (V) | 12 | 13 | 14 | 15 |
|---|---|---|---|---|---|---|---|
| sbAc | 100 | 100 | 100 | 100 | 100 | 100 | 100 |
| TP resin | | 30 | | 20 | 20 | | |
| rosin ester low sp | | | | | | 20 | 30 |
| PolyTHF® 2000 | | | 10 | 10 | 15 | 5 | |
| Tributylcitrat | | | | | | | 5 |
| **Messergebnisse** | | | | | | | |
| T bei tan delta Max (°C) | -26 | -4 | -39 | -25 | -30 | -27 | -28 |
| Höhe von tan delta Max | 1,55 | 1,80 | 1,85 | 1,95 | 2,05 | 1,90 | 2,10 |

Tabelle 1 zeigt den erfindungsgemäß gewünschten Effekt für eine Dispersions-Haftklebemasse, Tabelle 2 für eine löse mittelbasierte Polyacrylat-Haftklebemasse. Die Vergleichsbeispiele zeigen, dass sich sowohl allein mit Harz als auch allein mit Weichmacher die Dämpfung (Erhöhung von tan delta Max) gegenüber dem reinen Basispolymer prinzipiell erhöhen lässt. In diesen Fällen verändert sich die Temperaturlage des tan delta Maximums allerdings deutlich weg von der der des reinen Polymers. Die geeignete Kombination aus beiden Additiven sorgt einerseits dafür, dass die Temperaturlage des tan delta Maximums sehr nahe bei der des reinen Polymers bleibt, und zeigt zusätzlich den überraschenden Effekt, dass die Kombination eine höhere Dämpfung bei gleicher Gesamteinsatzmenge der Additve bewirkt als bei den reinen Additiven (Beispiel 4 gegenüber den Vergleichsbeispielen 2 und 3 sowie Beispiel 12 gegenüber den Vergleichsbeispielen 10 und 11).

**Patentansprüche**

1.   Mehrschicht-Verbund zur Verwendung als Membran für elektroakustische Wandler, umfassend eine erste und eine zweite Deckschicht und eine zwischen diesen Deckschichten angeordnete Schicht einer Haftklebemasse, **dadurch gekennzeichnet, dass** die Haftklebemasse zumindest eine Polymer-Komponente, eine Klebharz-Komponente und ein weichmachendes Additiv enthält,

i) wobei die Polymer-Komponente zu mindestens 50 Gew.-% auf Polyacrylmonomeren basiert, und wobei die Polymerkomponente dadurch charakterisiert sind,

A) dass die Polymeren ein zahlenmittleres Molekulargewicht $M_n$ von mindestens 50 000 g/mol aufweisen oder
B) dass der mittels Soxhlet-Extraktion in Tetrahydrofuran bestimmte Gelwert der Polymerkomponente mindestens 35 % beträgt,

ii) wobei als Klebharze solche polymeren Verbindungen eingesetzt werden, deren zahlenmittleres Molekulargewicht nicht mehr als 10 000 g/mol beträgt,
iii) und wobei das weichmachende Additiv gewählt ist aus der Liste gebildet aus $C_2$- bis $C_{14}$-Alkylester von Carbonsäuren; $C_2$- bis $C_{14}$-Arylester von Carbonsäuren; $C_2$- bis $C_{14}$-Alkylester anorganischer Säuren; $C_2$- bis $C_{14}$-Arylester anorganischer Säuren; Polyester organischer Säuren; Polyalkylenglycolether; epoxidiertes Sojabohnenöl; Alkansulfonsäurephenylester mit Alkylresten von $C_{10}$ bis $C_{21}$; Alkandisulfonsäure-diphenylester mit Alkylresten von $C_{10}$ bis $C_{21}$.

2.   Mehrschicht-Verbund nach Anspruch 1, **dadurch gekennzeichnet, dass**

die Carbonsäuren der eingesetzten $C_2$- bis $C_{14}$-Alkylester und der $C_2$- bis $C_{14}$-Arylester ganz oder teilweise gewählt sind aus der Liste gebildet aus

Phthalsäure, 1,2-Cyclohexandicarbonsäure, Terephthalsäure, 1,4-Cyclohexandicarbonsäure, Benzoesäure, Cyclohexancarbonsäure, Glutarsäure, Adipinsäure, Azelainsäure, Sebazinsäure, Trimellitsäure, Zitronensäure, Acetylzitronensäure.

3. Mehrschicht-Verbund nach Anspruch 1 oder 2, **dadurch gekennzeichnet, dass**
als anorganische Säure der eingesetzten $C_2$- bis $C_{14}$-Alkylester und der $C_2$- bis $C_{14}$-Arylester ganz oder teilweise Phosphorsäure gewählt ist.

4. Mehrschicht-Verbund nach einem der vorangehenden Ansprüche, **dadurch gekennzeichnet, dass**
die Carbonsäuren der eingesetzten Polyester ganz oder teilweise gewählt aus der Liste gebildet aus Adipinsäure, Sebazinsäure, Azelainsäure, Phthalsäure und die Polyester ein zahlenmittleres Molekulargewicht $M_n$ von nicht mehr als 20 000 g/mol aufweisen.

5. Mehrschicht-Verbund nach einem der vorangehenden Ansprüche, **dadurch gekennzeichnet, dass**
die Klebharze ganz oder teilweise gewählt werden aus der Liste gebildet aus Kolophonium, Kolophoniumderivaten, Terpenphenolharzen, Polyterpenharzen, Alkylphenolharzen, aliphatischen C5-Kohlenwasserstoffharzen, aromatischen C9-Kohlenwasserstoffharzen, aliphatisch-aromatischen Kohlenwasserstoffharzen (C5/C9-Kohlenwasserstoffharzen).

6. Mehrschicht-Verbund nach einem der vorangehenden Ansprüche, **dadurch gekennzeichnet, dass**
die Glasübergangstemperatur (DSC) der Elastomer-Komponente nicht mehr als 5 °C beträgt.

7. Membran für elektroakustische Wandler, insbesondere Lautsprechermembran, erhältlich durch Prägen oder Tiefziehen eines Verbundes nach einem der vorangehenden Ansprüche.

8. Verwendung einer Membran nach Anspruch 7 zur Herstellung elektroakustischer Wandler, insbesondere zur Herstellung von Lautsprechern.

**Claims**

1. Multilayer composite for use as membrane for electroacoustic transducers, comprising a first and a second outer layer and, arranged between these outer layers, a layer of a pressure-sensitive adhesive,
**characterized in that**
the pressure-sensitive adhesive comprises at least one polymer component, one adhesive-resin component and one plasticizing additive,

i) where at least 50% by weight of the polymer component is based on polyacrylic monomers, and where the polymer component is **characterized in that**

A) the number-average molar mass $M_n$ of the polymer is at least 50 000 g/mol
or
B) the gel value of the polymer component is at least 35%, determined by means of Soxhlet extraction in tetrahydrofuran,

ii) where the number-average molar mass of polymeric compounds used as adhesive resins is not more than 10 000 g/mol,

iii) and where the plasticizing additive is selected from the list composed of $C_2$- to $C_{14}$-alkyl ester of carboxylic acid; $C_2$- to $C_{14}$-aryl ester of carboxylic acid; $C_2$- to $C_{14}$-alkyl ester of inorganic acid; $C_2$- to $C_{14}$-aryl ester of inorganic acid; polyester of organic acid; polyalkylene glycol ether; epoxidized soya bean oil; phenyl alkanesulphonate having $C_{10}$ to $C_{21}$ alkyl moieties; diphenyl alkanedisulphonate having $C_{10}$ to $C_{21}$ alkyl moieties.

2. Multilayer composite according to Claim 1, **characterized in that** all or some of the carboxylic acids of the $C_2$- to $C_{14}$-alkyl esters used and of the $C_2$- to $C_{14}$-aryl esters used are selected from the list composed of phthalic acid, 1,2-cyclohexanedicarboxylic acid, terephthalic acid, 1,4-cyclohexanedicarboxylic acid, benzoic acid, cyclohexanecarboxylic acid, glutaric acid, adipic acid, azelaic acid, sebacic acid, trimellitic acid, citric acid, acetylcitric acid.

**3.** Multilayer composite according to Claim 1 or 2, **characterized in that** phosphoric acid is selected as all or some of the inorganic acid of the $C_2$- to $C_{14}$-alkyl esters used and of the $C_2$- to $C_{14}$-aryl esters used.

**4.** Multilayer composite according to any of the preceding acids, **characterized in that** all or some of the carboxylic acids of the polyesters used are selected from the list composed of adipic acid, sebacic acid, azelaic acid, phthalic acid, and the number-average molar mass $M_n$ of the polyesters is not more than 20 000 g/mol.

**5.** Multilayer composite according to any of the preceding claims, **characterized in that** all or some of the adhesive resins are selected from the list composed of rosin, rosin derivatives, terpene-phenol resins, polyterpene resins, alkylphenol resins, aliphatic C5-hydrocarbon resins, aromatic C9-hydrocarbon resins, aliphatic-aromatic hydrocarbon resins (C5/C9-hydrocarbon resins).

**6.** Multilayer composite according to any of the preceding claims, **characterized in that** the glass transition temperature (DSC) of the elastomer component is not above 5°C.

**7.** Membrane for electroacoustic transducers, in particular loud speaker membrane, obtainable by embossing or thermoforming of a composite according to any of the preceding claims.

**8.** Use of a membrane according to Claim 7 for the production of electroacoustic transducers, in particular for the production of loud speakers.

## Revendications

**1.** Composite multicouche pour utilisation en tant que membrane pour des transducteurs électroacoustiques, comprenant une première et une deuxième couche de recouvrement et une couche d'une matière autoadhésive disposée entre ces couches de recouvrement,
**caractérisé en ce que**
la matière autoadhésive contient au moins un composant polymère, un composant-résine adhésive et un additif plastifiant,

> i) le composant polymère étant à raison d'au moins 50 % en poids à base de monomères polyacryliques, et les composants polymères étant **caractérisés en ce que**

>> A) les polymères présentent une masse moléculaire moyenne en nombre $M_n$ d'au moins 50 000 g/mole ou
>> B) la valeur de gel du composant polymère, déterminée par extraction au Soxhlet dans du tétrahydrofurane, est d'au moins 35 %,

> ii) en utilisant comme résines adhésives des composés polymères dont la masse moléculaire moyenne en nombre n'excède pas 10 000 g/mole,
> iii) et l'additif plastifiant étant choisi dans la liste constituée par des esters alkyliques en $C_2$-$C_{14}$ d'acides carboxyliques ; des esters aryliques en $C_2$-$C_{14}$ d'acides carboxyliques ; des esters alkyliques en $C_2$-$C_{14}$ d'acides inorganiques ; des esters aryliques en $C_2$-$C_{14}$ d'acides inorganiques ; des polyesters d'acides organiques ; des éthers de polyalkylèneglycols ; l'huile de soja époxydée ; des alcanesulfonates de phényle à radicaux alkyle en $C_{10}$ à $C_{21}$ ; des alcanedisulfonates de diphényle à radicaux alkyle en $C_{10}$ à $C_{21}$.

**2.** Composite multicouche selon la revendication 1, **caractérisé en ce que**
les acides carboxyliques des esters alkyliques en $C_2$-$C_{14}$ utilisés et des esters aryliques en $C_2$-$C_{14}$ sont choisis en partie ou en totalité dans la liste constituée par l'acide phtalique, l'acide 1,2-cyclohexane-dicarboxylique, l'acide téréphtalique, l'acide 1,4-cyclohexanedicarboxylique, l'acide benzoïque, l'acide cyclohexanecarboxylique, l'acide glutarique, l'acide adipique, l'acide azélaïque, l'acide sébacique, l'acide trimellitique, l'acide citrique, l'acide acétylcitrique.

**3.** Composite multicouche selon la revendication 1 ou 2, **caractérisé en ce que**
comme qu'acide inorganique des esters alkyliques en $C_2$-$C_{14}$ utilisés et des esters aryliques en $C_2$-$C_{14}$ est en partie ou en totalité choisi l'acide phosphorique.

**4.** Composite multicouche selon l'un quelconque des revendications précédents, **caractérisé en ce que** les acides carboxyliques des polyesters utilisés sont en partie ou en totalité choisis dans la liste constituée par l'acide adipique, l'acide sébacique, l'acide azélaïque, l'acide phtalique et les polyesters présentent une masse moléculaire moyenne en nombre $M_n$ n'excédant pas 20 000 g/mole.

**5.** Composite multicouche selon l'une quelconque des revendications précédentes, **caractérisé en ce que** les résines adhésives sont choisies en partie ou en totalité dans la liste constituée par la colophane, des dérivés de colophane, des résines terpéno-phénoliques, des résines polyterpéniques, des résines alkylphénoliques, des résines de type hydrocarbure aliphatique en C5, des résines de type hydrocarbure aromatique en C9, des résines de type hydrocarbure aliphatique-aromatique (résines de type hydrocarbure en C5/C9).

**6.** Composite multicouche selon l'une quelconque des revendications précédentes, **caractérisé en ce que** la température de transition vitreuse (DSC) du composant élastomère n'excède pas 5 °C.

**7.** Membrane pour transducteurs électro-acoustiques, en particulier membrane de haut-parleur, pouvant être obtenue par estampage ou emboutissage d'un composite selon l'une quelconque des revendications précédentes.

**8.** Utilisation d'une membrane selon la revendication 7 pour la fabrication de transducteurs électro-acoustiques, en particulier pour la fabrication de haut-parleurs.

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 7726441 B
- US 8189851 B
- US 2006281381 A1

**In der Beschreibung aufgeführte Nicht-Patentliteratur**

- **T.G. FOX.** *Bull. Am. Phys. Soc.,* 1956, vol. 1, 123